# EUROPÄISCHE PATENTSCHRIFT

(11) **EP 3 643 479 B1**
(45) Veröffentlichungstag und Bekanntmachung des Hinweises auf die Patenterteilung: **06.01.2021**
(21) Anmeldenummer: 18202252.5
(22) Anmeldetag: 24.10.2018
(51) Int. Cl.: B29C 64/245, B29C 64/124, B33Y 30/00

(54) **VERFAHREN UND VORRICHTUNG ZUM AUFBAU EINES FORMKÖRPERS DURCH STEREOLITHOGRAPHISCHES AUSHÄRTEN VON BAUMATERIAL DURCH PHOTOPOLYMERISATION**
METHOD AND DEVICE FOR BUILDING A SHAPED BODY BY STEREOLITHOGRAPHIC CURING OF BUILDING MATERIAL BY PHOTOPOLYMERIZATION
PROCÉDÉ ET DISPOSITIF DE FORMATION D'UN CORPS MOULÉ PAR DURCISSEMENT STÉRÉOLITHOGRAPHIQUE DU MATÉRIAU DE CONSTRUCTION PAR PHOTOPOLYMÉRISATION

(43) Veröffentlichungstag der Anmeldung: 29.04.2020
(73) Patentinhaber: Ivoclar Vivadent AG, 9494 Schaan (LI)
(72) Erfinder: John, Hendrik, 9470 Buchs SG (CH); Russ, Rebecca, 88400 Biberach (DE)
(74) Vertreter: Uexküll & Stolberg

(56) Entgegenhaltungen:
- EP-A1- 3 354 442
- WO-A1-2018/114655
- TW-B- I 630 090
- US-A1- 2016 303 795

## Beschreibung

Die vorliegende Erfindung betrifft ein Verfahren zum schichtweisen Aufbau eines Formkörpers durch stereolithographisches Aushärten von Baumaterial durch Photopolymerisation, bei dem

Baumaterial zwischen eine Bauplattform und eine transparente Basisscheibe gefördert wird und durch die Basisscheibe hindurch ortsselektiv belichtet wird, um oberhalb der Basisscheibe Baumaterial innerhalb einer vorgegebenen Kontur auszuhärten,
die Bauplattform relativ zur Basisscheibe angehoben und Baumaterial nachgeführt wird und
die beiden Schritte fortgesetzt werden bis der Formkörper durch ortsselektiv ausgehärtetes Baumaterial aufgebaut ist.

Der schichtweise oder kontinuierliche Aufbau von Formkörpern gehört zu den Fertigungsverfahren, die unter den Oberbegriff generative Fertigung oder additive Fertigung (Additive Manufacturing) fallen. Darunter wird eine Klasse von Verfahrensweisen verstanden, bei denen ein dreidimensionales Objekt (Formkörper) direkt auf Grundlage eines digitalen Modells des Formkörpers (z.B. ein CAD-Modell) aufgebaut wird. Dazu wird beim schichtweisen Aufbau das digitale Modell des Formkörpers in eine Vielzahl von aufeinanderfolgenden dünnen Schichten unterteilt, wobei jede Schicht eine durch das Modell definierte Kontur hat. Der Aufbauprozess wird durch Hinzufügen von Materialschichten durchgeführt, wobei jede Schicht so prozessiert wird, dass die durch das digitale Modell für diese Schicht vorgegebene Kontur erzeugt wird. Schließlich bildet der Stapel von übereinanderliegenden, miteinander verbundenen Schichten den Formkörper, der bei einigen Verfahren weiter bearbeitet wird, zum Beispiel durch Wärmebehandlungen zum Entbindern und Sintern. Der Begriff "Kontur" wird im Zusammenhang mit der vorliegenden Erfindung allgemein gebraucht und ist nicht auf eine einfache geschlossene Begrenzungslinie eingeschränkt, die ein einfach zusammenhängendes Gebiet umschließt, sondern kann mehrere separate Konturabschnitte umfassen, die nebeneinander liegende Flächen umschließen, die zusammen die jeweilige Schicht bilden, oder es können äußere und innere Konturabschnitte vorhanden sein, die ringförmige Gebiete der Schicht definieren.

Die vorliegende Erfindung betrifft den additiven Aufbau von Formkörpern, wobei Baumaterial durch ortselektive Belichtung durch Photopolymerisation ausgehärtet wird. Das Baumaterial kann in unterschiedlichen Viskositäten von fließfähig bis nicht mehr fließfähig vorliegen und kann neben photopolymerisierbaren Monomerverbindungen Füllstoffe wie Keramik-, GlasKeramik- oder Metallpulver und gegebenenfalls Dispergiermittel und andere Additive enthalten. Die vorliegende Erfindung ist insbesondere auf die Herstellung von Keramik- oder Glaskeramikformteilen (sogenannten Grünlingen), wie dentalen Inlays, Onlays, Veneers, Kronen, Brücken und Gerüsten gerichtet.

In WO 2010/045950 A1 ist ein Beispiel für ein Verfahren zum Aufbau eines Formkörpers wie oben beschrieben bekannt, das insbesondere den Aufbau von Dentalrestaurationen aus keramischen Schlickern betrifft, die eine flüssige photopolymerisierbare Komponente und darin verteilten Füllstoff aus keramischem oder glas-keramischem Pulver enthalten. Bei diesem bekannten Verfahren wird der Formkörper sukzessive durch übereinander ausgehärtete Schichten aufgebaut. Dabei wird eine Bauplattform vertikal beweglich über einem Wannenboden gehalten, der zumindest im Baugebiet lichtdurchlässig ist. Unterhalb des Wannenbodens befindet sich eine Belichtungseinheit. Die Bauplattform wird zunächst in den Schlicker in der Wanne soweit abgesenkt, bis zwischen Bauplattform und Wannenboden nur noch eine Schicht mit der gewünschten Schichtdicke verbleibt. Anschließend wird diese Schicht durch die Belichtungseinheit mit der durch das digitale Modell für diese Schicht vorgegebenen Kontur durch die Belichtungseinheit belichtet und dadurch ausgehärtet. Nach Anheben der Bauplattform wird Schlicker, z.B. mit einer Rakel, aus der Umgebung nachgeführt und danach die Bauplattform erneut in den Schlicker abgesenkt, wobei die Absenkung so gesteuert wird, dass der Abstand zwischen der zuletzt ausgehärteten Schicht und dem Wannenboden eine Schicht Baumaterial mit der gewünschten Dicke definiert. Die letzten Schritte werden so oft wiederholt, bis durch die aufeinanderfolgende Aushärtung von Schichten mit jeweils durch das digitale Modell vorgegebener Kontur der Formkörper mit der gewünschten dreidimensionalen Form aufgebaut ist.

Die Belichtungseinheit ist zur Belichtung einer großen Anzahl von Bildelementen ausgestaltet, die ein rasterförmiges Belichtungsfeld bilden. Die Belichtungseinheit umfasst z.B. eine Lichtquelle und einen Flächenintensitätsmodulator (Spatial Light Modulator). Die aktive Oberfläche des Flächenintensitätsmodulators wird von der Lichtquelle beleuchtet. Die aktive Oberfläche umfasst eine Matrix von Belichtungselementen, wobei jedes Belichtungselement einem Bildelement in dem Belichtungsfeld der Belichtungseinheit zugeordnet ist. Der Flächenintensitätsmodulator kann z.B. eine sogenannte Mikrospiegel-Vorrichtung, DMD, sein (Digital Mirror Device); darunter versteht man einen Chip, auf dem eine große Anzahl von matrixförmig angeordneten Mikrospiegelaktoren vorhanden ist. Jeder Mikrospiegelaktor ist individuell selektiv von einer Steuereinheit ansteuerbar, um selektiv zwischen einer Beleuchtungsstellung, in der der Mikrospiegel Licht von der Lichtquelle auf das zugehörige Bildelement richtet, und einer Dunkelstellung kippbar ist, in der der Mikrospiegel das Licht in einen inaktiven Bereich ablenkt. Indem der Mikrospiegel mit einem für jedes Belichtungselement selektiv vorgegebenen Tastverhältnis hin und her gekippt wird, kann so die für das zugeordnete Bildelement erzeugte Belichtungsintensität als mittlere Intensität nach Maßgabe des Tastverhältnisses eingestellt werden. Die mit einem DMD ausgestattete Belichtungseinheit wird auch als DLP-Einheit (Digital Light Processing) bezeichnet. Ein anderes Beispiel für einen Flächenintensitätsmodulator umfasst eine Flüssigkristallanzeige, die von einer Lichtquelle transmissiv durchleuchtet wird und die in eine matrixförmige Anordnung mit einer großen Anzahl von individuellen Belichtungselementen unterteilt ist, die jeweils einem Bildelement zugeordnet sind.

Nach vollständigem Aufbau des Formkörpers kann dieser mit der Bauplattform entnommen werden. In der Regel schließen sich daran noch weitere Bearbeitungsschritte an. In dem oben dargestellten Verfahren wird durch die schichtweise Polymerisation des Baumaterials ein Grünling hergestellt. Dieser wird dann auf hohe Temperaturen aufgeheizt, um das Bindemittel, in diesem Fall Photopolymer, zu entfernen. Diese geschieht bei hohen Temperaturen durch thermische Zersetzung und Reaktionen, die das Polymer in leichtere Moleküle zersetzen, die an die Oberfläche diffundieren und schließlich als Gase entweichen. An diesen Vorgang der Entbinderung kann sich dann zur weiteren Verfestigung eine weitere Temperaturbehandlung anschließen, in der die verbliebenen Keramikpartikel in dem Formkörper gesintert werden.

Das bekannte Verfahren ist nachteilig, da nur relativ niedrigviskose (< 10Pas), fliessfähige Baumaterialien eingesetzt werden können. Eine oben offene Wanne zur Aufnahme des Baumaterials nimmt zudem bei entsprechend großen Bauplattformen eine relativ große Stellfläche des Gesamtsystems ein. Ferner ist eine oben offene Wanne mit Baumaterial eher nur in Laborumgebungen einsetzbar, jedenfalls aber für den Einsatz z.B. in Zahnarztpraxen eher ungeeignet, da dort sichergestellt sein muss, dass das Bedienungspersonal es mit einem möglichst "trockenen" und einfachen Prozess zu tun hat, bei dem es im Idealfall nicht mit dem unausgehärteten Baumaterial (Monomer) in Berührung kommt.

Die vorliegende Erfindung zielt insbesondere auch darauf ab, hochviskose Baumaterialien, die nicht selbst fließfähig sind, verarbeiten zu können. Baumaterialien, die einen hohen Anteil von Füllstoffen, z.B. in Form von Keramikpulver, enthalten, können eine sehr hohe Viskosität haben und nicht fließfähig sein. Für derartige Materialien ist die Nachführung von Baumaterial in den Baubereich in der Wanne unterhalb der Bauplattform nicht unproblematisch, da auch bei Einsatz einer Rakel der störungsfreie Transport von hochviskosem Baumaterial über den Wannenboden bis in den Baubereich technisch aufwendig ist.

Ein weiterer Nachteil besteht darin, dass bei Verwendung einer Wanne mit Baumaterial ein Wechsel zwischen verschiedenen Baumaterialzusammensetzungen während des Bauvorgans sehr schwierig, jedenfalls mit hohem Aufwand verbunden ist, da dazu verschiedene Wannen mit verschiedenen Baumaterialzusammensetzungen unter die Bauplattform transportierbar sein müssen. Sehr schwierig ist auch die Realisierung von graduellen, kontinuierlichen Übergängen zwischen Baumaterialzusammensetzungen, z.B. die Realisierung von Farbübergängen in dem Formkörper.

Aus EP 3 354 442 A1 ist ein Verfahren mit den Merkmalen des Oberbegriffs von Patentanspruch 1 bekannt. Über die zuvor beschriebenen Verfahrensmerkmale ist danach vorgesehen, dass die Bauplattform an der Stirnseite eines in einem Zylinder (10) gleitfähig geführten Kolbens liegt, wobei die der Stirnseite des Kolbens zugewandte Endfläche des Zylinders durch die Basisscheibe geschlossen ist. Weiteres Baumaterial wird nachgeführt, indem der Kolben von der Basisscheibe weg bewegt und gleichzeitig wird Baumaterial durch eine Zuleitung, die in das Innere des Zylinders mündet, gefördert, um das durch Bewegung des Kolbens weg von der Basisscheibe entstehende zusätzliche Volumen mit Baumaterial zu füllen.

Diese Verfahrensweise hat eine Reihe von Vorteilen. Das Verfahren kann mit einem sehr kompakten Aufbau durchgeführt werden, da keine seitlich über den eigentlichen Baubereich hinausragende Wanne vorhanden ist. Es wird vielmehr nur ein Zylinder benötigt, in dem die Bauplattform als verschiebbarer Kolben geführt ist. Die dem Kolben zugewandte Endfläche des Zylinders ist durch die Basisscheibe verschlossen. Der Kolben wird von der Basisscheibe weg bewegt, so dass der von Zylinder, Basisscheibe und Kolben umschlossene Bauraum mit dem im Aufbau befindlichen Formkörper mitwächst.

Ein weiterer Vorteil ist, dass Baumaterial nicht in einer offenen Wanne frei zugänglich ist, sondern sich in einem geschlossenen, durch Zylinder, Kolben und Basisscheibe definierten Bauraum befindet, so dass keine Gefahr besteht, dass Bedienungspersonal mit dem Baumaterial in Berührung kommen kann. Ferner wird das Baumaterial, in sehr effizienter Weise verwendet, da nur so viel Baumaterial in den während des Bauvorgangs mitwachsenden Bauraum nachgefüllt wird, wie für die Bauhöhe des Formkörpers erforderlich ist.

Es ist Aufgabe der vorliegenden Erfindung, ein Verfahren mit der Bauplattform als Stirnseite eines in einem Zylinder beweglichen Kolbens, das dadurch mit geringem Platzbedarf und betriebssicher ausführbar ist, so auszuführen, dass, wenn die Bauplattform von der Basisplatte weg bewegt wird, die Ablösung des ausgehärteten Materials von der Basisplatte erleichtert wird.

Zur Lösung dieser Aufgabe dient das Verfahren mit den Merkmalen des Patentanspruchs 1. Vorteilhafte Ausführungsformen des Verfahrens sind in Anspruch 2 bis 7 angegeben. Eine Vorrichtung zur Durchführung des Verfahrens ist in Anspruch 8 definiert, und vorteilhafte Ausführungsformen der Vorrichtung sind in den davon abhängigen Ansprüchen aufgeführt.

Bei dem erfindungsgemäßen Verfahren wird der Kolben bei der Bewegung im Zylinder weg von der Basisscheibe gleichzeitig um eine mit der Längsachse des Zylinders zusammenfallende Drehachse gedreht, so dass Punkte am Außenumfang des Kolbens eine schrauben- oder wendelförmige Bewegung vollführen. Dadurch wird bewirkt, dass bei der Bewegung des Kolbens weg von der Basisscheibe dieser linearen Bewegung weg von der Basisscheibe eine Bewegungskomponente quer zur Basisscheibe überlagert ist, die die Ablösung von der Basisscheibe erleichtert. Bei einem schichtweise arbeitenden Verfahren bedeutet dies, dass nach Aushärten einer Schicht, wenn der Kolben in Richtung weg von der Basisscheibe bewegt wird, die Bewegung beim Abheben der zuletzt ausgehärteten Schicht keine rein senkrechte Bewegung zur Basisscheibe ist, sondern durch die gleichzeitige Drehung des Kolbens auch eine Bewegungskomponente quer über die Basisscheibe vorhanden ist. Diese Bewegung unterstützt die Ablösung der zuletzt ausgehärteten Schicht von der Basisscheibe. Weitere bevorzugte Maßnahmen zur Verhinderung von Anhaftung der ausgehärteten Schichten an der Basisscheibe und damit zur leichteren Ablösung werden weiter unten erläutert.

Grundsätzlich kann das Verfahren kontinuierlich durchgeführt werden, d.h. der Kolben wird kontinuierlich von der Basisscheibe weg bewegt (mit der Geschwindigkeit, mit der der Formkörper wächst). Dabei wird Baumaterial kontinuierlich nachgeführt, um den Bauraum im Zylinderinneren gefüllt zu halten und die Belichtungseinheit belichtet kontinuierlich, und zwar vergleichbar mit einem Video mit sehr schnell aufeinanderfolgenden Bildern, sodass die momentan auszuhärtende Kontur kontinuierlich, nach Maßgabe des digitalen Modells des Formkörpers, angepasst wird.

Unter den stereolitergraphischen Bauverfahren sind jedoch die schichtweise arbeitenden Verfahren weiter verbreitet. In einer bevorzugten Ausführungsform wird das Verfahren der vorliegenden Erfindung als schichtweise arbeitendes Bauverfahren ausgeführt. Bei Baubeginn wird eine erste Schicht Baumaterial zwischen dem Kolben und der Basisscheibe, die auf Abstand einer gewünschten Schichtdicke zueinander eingestellt sind, durch Auffüllen des Zwischenraums mit Baumaterial gebildet und die gebildete Schicht durch die Basisscheibe hindurch ortsselektiv belichtet, um ein Schichtgebiet mit der für diese Schicht durch das digitale Modell des Formkörpers vorgegebenen Kontur auszuhärten und an dem Kolben zu fixieren. Anschließend wird der Kolben um eine Schichtdicke weiter von der Basisscheibe weg bewegt und durch gleichzeitiges Nachführen von Baumaterial eine weitere Schicht zwischen der zuletzt ausgehärteten Schicht und der Basisscheibe gebildet. Die weitere Schicht wird durch die Basisscheibe hindurch ortsselektiv belichtet, um ein Schichtgebiet mit für die jeweilige Schicht durch das digitale Modell des Formkörpers vorgegebener Kontur auszuhärten. Die beiden zuletzt genannten Schritte werden sooft wiederholt, bis der Formkörper durch die übereinander ausgehärteten Schichtgebiete aufgebaut ist. Dabei wird die weitere Schicht Baumaterial jeweils gebildet, indem der Kolben um eine der gewünschten Schichtdicke entsprechende Distanz von der Basisscheibe weg bewegt wird und gleichzeitig Baumaterial durch die Zuleitung gefördert wird, um das durch die Bewegung des Kolbens weg von der Basisscheibe entstehende zusätzliche Volumen mit einer Schicht Baumaterial zu füllen.

Soweit die Basisscheibe in der vorliegenden Beschreibung als "transparent" bezeichnet wird, ist damit gemeint, dass durch sie hindurch eine ortselektive Belichtung durchgeführt werden kann, sie also lichtdurchlässig ist, was nicht ausschließt, dass gewisse Anteile der einfallenden Strahlung in der Basisscheibe absorbiert oder gestreut werden.

Vorzugsweise wird die Bewegung des Kolbens durch einen Antriebsmotor bewirkt, wobei eine Drehbewegung des Kolbens durch eine Getriebeverbindung gleichzeitig in die lineare Bewegung des Kolbens weg von der Basisscheibe umgesetzt wird, z.B. durch ein Spindelgetriebe. Das kann z.B. einfach dadurch geschehen, dass zumindest ein Teilbereich einer Kolbenstange als Gewindestange ausgebildet ist, die in einem relativ zum Zylinder feststehenden Innengewinde ausgenommen ist, wobei der Antriebsmotor die Kolbenstange dreht, die dann als Spindel gleichzeitig die Längsbewegung und die Drehbewegung des Kolbens bewirkt. Das Innengewinde kann zum Beispiel in der Wand einer zentralen Öffnung einer zur Basisscheibe parallelen Zwischenwand in dem Zylinder oder einem Deckel des Zylinders gebildet sein, wobei jenseits der Zwischenwand der Antriebsmotor und weitere Komponenten zum Betrieb untergebracht sein können. Die Gewindestange kann dann in diesem Innengewinde in dem Deckel durch den Antriebsmotor gedreht werden, sodass durch den Spindelantrieb neben der Drehbewegung eine lineare Bewegung des Kolbens bewirkt wird. In einem solchen Fall muss die Komponente mit dem Innengewinde, in das das Außengewinde der Kolbenstange eingreift, während des Bauvorgangs relativ zum Zylinder fixiert sein, damit durch die Drehung der Kolbenstange in dem Innengewinde eine definierte Bewegung des Kolbens relativ zum Zylinder bewirkt wird. Die Fixierung dieser Komponente sollte allerdings lösbar sein, damit nach Abschluss des Bauvorgangs und Lösung der Fixierung die Komponente mit Innengewinde samt Kolbenstange und Kolben mit dem daran hängenden aufgebauten Formkörper entnommen werden kann, wobei die Komponente (z.B. Zylinderdeckel) nach Art einer Mutter auf dem Aussengewinde der Kolbenstange sitzt.

In einer bevorzugten Ausführungsform wird Baumaterial in einer mit der Zuleitung des Zylinders verbundenen Kartusche bereitgehalten, wobei Baumaterial aus der Kartusche durch die Zuleitung in den Zylinder gefördert wird, indem ein kontrolliert angetriebener Kartuschenkolben Baumaterial aus der Kartusche in den Zylinder presst. Die Bewegung des Kartuschenkolbens kann kontrolliert z.B. hydraulisch, pneumatische oder durch einen Stellmotor angetrieben werden.

In einer bevorzugten Ausführungsform wird eine Mehrzahl von Baumaterialzusammensetzungen bereitgehalten und unter Steuerung einer Steuereinheit selektiv eine oder mehrere von den Baumaterialzusammensetzungen in den Zylinder gefördert. Es können zum Beispiel eine Mehrzahl von Kartuschen jeweils mit einer Zuleitung mit dem Zylinder verbunden sein, wobei die Steuereinheit selektiv eine oder mehrere der Kartuschen mit den jeweils gewünschten Baumaterialzusammensetzungen zur Förderung von Material in den Zylinder ansteuert. Grundsätzlich ist es auch möglich, dass mehrere Kartuschen an eine Sammelleitung angeschlossen sind, die dann als Zuleitung ins Zylinderinnere mündet.

In einer bevorzugten Ausführungsform wird nach Abschluss des Bauvorgangs des Formkörpers überschüssiges (nicht-polymerisiertes) Baumaterial mittels Druckluft aus dem durch den Kolben abgeschlossenen Bauraum im Zylinderinneren herausgepresst, vorzugweise zurück in die dazugehörige Kartusche.

In einer bevorzugten Ausführungsform wird nach Entfernen des überschüssigen Baumaterials Reinigungsflüssigkeit in den Zylinder geleitet, um den Formkörper von etwa noch anhaftenden Baumaterialresten zu befreien.

Eine Zuleitungsöffnung für Druckluft und Reinigungsflüssigkeit kann sich im oberen Abschnitt des Zylinders befinden und wird dadurch freigegeben, dass der Kolben sich über die Position der Zuleitungsöffnung hinweg bewegt, so dass die Zuleitungsöffnung dann ins Zylinderinnere mündet. Nicht ausgehärtetes Baumaterial, sofern es sich nur um eine Komponente handelt, wird durch die Druckluft wieder zurück in die jeweilige Kartusche gepresst. Falls mehrere Baumaterialzusammensetzungen vorhanden sind, werden diese zusammen entsorgt. Für den Ablauf der Reinigungsflüssigkeit ist eine separate Öffnung ähnlich dem Baumaterialzulauf direkt oberhalb der Basisscheibe vorgesehen. So könnte z.B. die Reinigungsflüssigkeit im Kreislauf gefördert werden, um so den Bauraum zu durchspülen, was eine höhere Reinigungswirkung am Bauteil hervorruft.

Anschließend kann der Formkörper weiteren Bearbeitungsschritten unterzogen werden, z.B. entbindert und gesintert werden.

Eine Vorrichtung zur Durchführung des erfindungsgemäßen Verfahrens umfasst
einen Zylinder, dessen eine Grundseite durch eine wenigstens in einem zentralen Gebiet transparente Basisscheibe geschlossen ist und in dem ein Kolben in Längsrichtung des Zylinders durch einen Antriebsmotor verfahrbar geführt ist, so dass durch den Zylinder, den Kolben und die Basisscheibe ein umschlossener Bauraum mit variablem Volumen im Inneren des Zylinders definiert ist,
einen Behälter mit Baumaterial, der mit einer Zuleitung verbunden ist, die angrenzend an die innere Oberfläche der Basisscheibe ins Innere des Zylinders mündet, und eine Fördereinrichtung zum Fördern von Baumaterial aus dem Behälter durch die Zuleitung ins Innere des Zylinders,
eine Belichtungseinheit, die zur ortselektive Belichtung durch die Basisscheibe hindurch ausgestaltet ist, und
eine Steuereinheit, die dazu eingerichtet ist, den Antriebsmotor des Kolbens und die Fördereinrichtung zu steuern, um den durch Bewegung des Kolbens weg von der Basisscheibe entstehenden zusätzlichen Raum mit Baumaterial zu füllen, und dazu eingerichtet ist, die Belichtungseinheit zur ortselektiven Belichtung anzusteuern, um nachgeführtes Baumaterial oberhalb der Basisscheibe innerhalb einer von der Steuereinheit vorgegebenen Kontur auszuhärten.

Eine solche Vorrichtung kann sehr kompakt aufgebaut sein, indem die Belichtungseinheit in einem den Zylinder fortsetzenden zylindrischen unteren Gehäuseabschnitt untergebracht ist, während die Aufhängung des Kolbens und der Antrieb und die Steuereinheit in einem den Zylinder am gegenüberliegenden Endbereich fortsetzenden oberen Gehäuseabschnitt enthalten sind. Als Behälter mit Baumaterial kann eine Kartusche seitlich an dem Zylinder angeordnet sein und mit der Zuleitung in den Zylinder verbunden sein. Bei einem solchen Aufbau kann die für die Vorrichtung benötigte Stellfläche auf die Querschnittsfläche des Zylinders beschränkt sein.

Der Zylinder ist ein senkrechter Zylinder, d.h. die Zylinderachse und die Mantelfläche stehen senkrecht auf den Endflächen. Vorzugsweise ist der Zylinder ein Kreiszylinder. Hierzu sei bemerkt, dass die geometrische Definition des Zylinders im Zusammenhang mit der vorliegenden Erfindung sich auf den Zylinderinnenraum bezieht. Sofern die Wandstärke des Zylindermantels konstant ist, ist auch die Außenform zylindrisch. Grundsätzlich ist es aber auch denkbar, dass ein zylindrischer Hohlraum in einem länglichen Kubus oder einem anderen prismenförmigen Körper oder Gehäuse ausgebildet ist, wobei ein solcher Körper dann auch ein "Zylinder" im Sinne dieser Erfindung wäre, in dem ein Kolben verschiebbar geführt ist.

Erfindungsgemäß ist in der Vorrichtung der Kolben auf der von der Basisscheibe abgewandten Seite mit einer Kolbenstange mit einem Außengewinde verbunden, das in ein Innengewinde in einer relativ zu dem Zylinder fixierten Komponente eingreift. Die Kolbenstange hat eine zentriert entlang ihrer Längsachse verlaufende, nicht drehsymmetrische Ausnehmung; die Ausnehmung kann z.B. rechteckig oder anderweitig vieleckig sein. In diese Ausnehmung ist ein im Querschnitt komplementär geformter Antriebsstift gleitfähig eingeführt, so dass ein formschlüssiger Eingriff in Bezug auf Drehbewegungen des Antriebsstiftes in der Ausnehmung gegeben ist, während der Antriebsstift in axialer Längsrichtung in der Ausnehmung beweglich ist. Der Antriebsstift ist durch den Antriebsmotor zur Drehung um seine Längsachse antreibbar, wodurch die Kolbenstange und der Kolben mitgedreht werden, so dass das Außengewinde der Kolbenstange in dem Innengewinde der fixierten Komponente gedreht wird, um so den Kolben relativ zu der Basisscheibe zu bewegen, wobei gleichzeitig der Antriebsstift sich in der Ausnehmung der Kolbenstange in seiner Längsrichtung verschiebt. Die Ausnehmung der Kolbenstange kann zum Beispiel die Querschnittsform wie die Ausnehmung einer Inbusschraube (Innensechskant) und der Antriebsstift eine komplementäre sechseckeckige Form wie ein entsprechender Inbusschlüssel haben. Während der Bewegung des Kolbens weg von der Basisscheibe, die mit einer entsprechenden Bewegung der Kolbenstange einhergeht, wird der Antriebsstift relativ zu der Ausnehmung der Kolbenstange tiefer in diese hineingeschoben.

In einer bevorzugten Ausführungsform ist der Behälter mit Baumaterial als Kartusche ausgeführt und die Fördereinrichtung als angetrieben vorschiebbarer Kartuschenkolben ausgebildet, der bei durch die Steuereinheit gesteuertem Vorschub Baumaterial aus der Kartusche durch die Zuleitung in den Zylinder presst.

An der Zuleitung ist vorzugsweise ein Ventil vorhanden, das dazu ausgestaltet ist, die Zuleitung unter Steuerung der Steuereinheit öffnen oder sperren zu können, wenn z.B. ein anderes Baumaterial verwendet oder Reinigungsflüssigkeit in den Bauraum eingeleitet werden soll, um das Baumaterial in den Kartuschen nicht zu kontaminieren. Beim Herausdrücken überschüssigen Baumaterials soll das Baumaterial, sofern es nicht durch anderes Material kontaminiert ist, durch dieselbe Zuleitung wieder zurück in die Kartusche gepresst werden, um es für den folgenden Baujob zu recyclen.

In einer bevorzugten Ausführungsform ist eine Mehrzahl von Kartuschen um den Umfang des Zylinders herum verteilt angeordnet, wobei jede Kartusche mit einer Zuleitung mit dem Zylinder verbunden ist und selektiv von der Steuereinheit ansteuerbar ist, um Baumaterial aus der jeweiligen Kartusche in den Zylinder zu drücken. Eine zusätzliche Zu- bzw. Ableitung kann dabei der Ableitung von vermischtem Baumaterial oder Reinigungsflüssigkeit dienen.

In einer bevorzugten Ausführungsform ist die Basisscheibe so ausgebildet, dass die dem Inneren des Zylinders zugewandte Seite inhibitorisch wirkende Stoffe abgibt, die ein Anhaften der aushärtenden Schicht an der dem Inneren des Zylinders zugewandten Oberfläche der Basisscheibe verhindern oder minimieren.

Aus WO 2015/0360419 A1 ist eine Stereolithographie-Vorrichtung mit einer Wanne bekannt, die aus einem Material besteht, das eine gewisse Sauerstoffdurchlässigkeit hat. Sauerstoff kann hier als Inhibitor wirken, der eine reaktionsträge dünne Zwischenschicht bildet, die die Anhaftung der aushärtenden Schicht an der Wannenoberfläche reduziert. Als sauerstoffdurchlässige Materialien werden zum Beispiel Teflon AF und Fluor-Polymere genannt.

In einer bevorzugten Ausführungsform besteht die Basisscheibe aus einem nanoporösen Material, in dem inhibitorische Substanzen gespeichert sind und/oder durch das inhibitorische Substanzen diffundieren und die Basisscheibe passieren können, so dass sie an der Oberfläche der Basisscheibe freigesetzt werden und dort ein Anhaften des polymerisierenden Baumaterials bei der Aushärtung verhindern.

In einer bevorzugten Ausführungsform ist auf der vom Inneren des Zylinders abgewandten Seite der Basisscheibe eine Kammer ausgebildet, sodass diese Kammer mit einem transparenten inhibitorischen Stoff, z.B. gasförmigen Stoff befüllbar ist. In einer bevorzugten Ausführungsform ist vorgesehen, dass die mit Inhibitoren im Stoff gefüllte Kammer mit Überdruck beaufschlagt werden kann, um das inhibitorische Material in und durch das nanoporöse Material zu pressen.

Aus DE 10 2013 215 040 A1 ist eine Stereolithographie-Vorrichtung bekannt, bei der an der Basis eine semipermeable Folie einen Hohlraum überspannt, durch den Inhibitoren zugeführt werden. Die Verwendung von semipermeablen Folien und die Zufuhr von Inhibitoren zur Vermeidung von Anhaftung nach der Photopolymerisation sind auch in US 5,122,441 B1 beschrieben.

Nanoporösen Materialien, durch die Inhibitoren diffundieren können, um Anhaftung zu vermeiden, sind ebenfalls in dem schon genannten Dokument DE 10 2013 215 040 A1 und in US 2017/0151718 A1 beschrieben.

In einer bevorzugten Ausführungsform ist die dem Inneren des Zylinders zugewandte Oberfläche der Basisscheibe mit einer superamphiphoben Schicht beschichtet, die Anhaften der aushärtenden Schicht an der Basisscheibe minimiert. Superamphiphobe Oberflächen haben die Eigenschaft, dass sie sowohl gegenüber Wasser als auch gegenüber Ölen abweisend sind. Derartige Schichten sind z.B. in den Artikeln "Glas, das sich selbst reinigt - Superamphiphobe Beschichtungen", Doris Vollmer, Max-Planck-Gesellschaft, Jahrbuch 2013, und "Superamphiphobic Sufaces", Zonglin Chu et al., Chemical Society Reviews, Issue 8, 2014, beschrieben.

Die Erfindung wird im Folgenden anhand von Ausführungsbeispielen in den Zeichnungen beschrieben, in denen:
Fig. 1 eine Querschnittsansicht eines relevanten Bereichs einer zur Durchführung eines erfindungsgemäßen Verfahrens ausgestalteten Vorrichtung zeigt,
Fig. 2 eine Querschnittsansicht wie in Fig. 1 in einem nachfolgenden Verfahrensschritt zeigt,
Fig. 3 eine Querschnittsansicht wie in Fig. 1 und 2 in einem weiter fortgeschrittenen Verfahrensstadium zeigt,
Fig. 4a eine Querschnittsansicht wie in den vorhergehenden Figuren in einem Endstadium eines Bauvorgangs zum Aufbau eines Formkörpers zeigt,
Fig. 4b eine Querschnittsansicht in einer gegenüber Fig. 4a um die Zylinderachse gedrehten Ebene zeigt, in der ein zusätzlicher Einlass und Auslass für die Reinigungsflüssigkeit im Schnitt dargestellt sind,
Fig. 5 eine Querschnittsansicht wie in den vorhergehenden Figuren mit einer erweitert ausgestalteten Vorrichtung sowie eine Querschnittsansicht eines Details einer Sammelleitung zur Baumaterialzufuhr zeigt und
Fig. 6 eine schematische perspektivische Außenansicht einer zur Durchführung des erfindungsgemäßen Verfahrens ausgestalteten Vorrichtung zeigt.

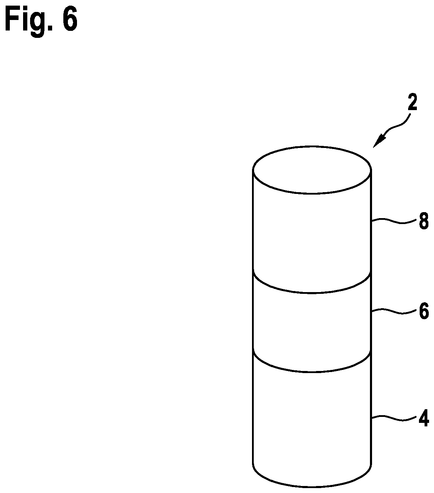

Fig. 6 zeigt schematisch eine perspektivische Außenansicht eines Gehäuses einer Vorrichtung zur Durchführung des erfindungsgemäßen Verfahrens, wobei Anschlüsse und Leitungen zur Energie- und Materialversorgung zur Vereinfachung der Darstellung fortgelassen sind. Das zylindrische Gehäuse 2 der Vorrichtung ist in axialer Richtung der Zylinderform in drei Abschnitte 4, 6 und 8 gegliedert. In dem unteren Abschnitt 4 befindet sich eine Belichtungseinheit. Die Belichtungseinheit ist zur Belichtung einer großen Anzahl von Bildelementen in einem vorgegebenen Belichtungsfeld ausgestaltet. Die Belichtungseinheit beinhaltet z.B. eine Lichtquelle und einen Flächenintensitätsmodulator (Spatial Light Modulator), dessen wirksame Oberfläche von der Lichtquelle beleuchtet wird. Der Flächintensitätsmodulator umfasst eine Matrix von Belichtungselementen. Der Flächenintensitätsmodulator kann z.B. eine sogenannte Mikrospiegel-Vorrichtung sein; darunter versteht man einen Chip, auf dem eine große Anzahl von matrixförmig angeordneten Mikrospiegelaktoren angeordnet ist. Jeder Mikrospiegelaktor ist individuell selektiv von einer Steuereinheit ansteuerbar, um ihn selektiv zwischen einer Beleuchtungsstellung, in der der zugehörige Mikrospiegel Licht von der Lichtquelle auf das zugehörige Bildelement richtet, und eine Dunkelstellung hin und her kippbar, in der der Mikrospiegel das Licht der Lichtquelle in einen inaktiven Bereich ablenkt. Durch periodisches Kippen der Mikrospiegel mit einem für jedes Belichtungselement selektiv vorgegebenen Tastverhältnis kann so die für das zugeordnete Bildelement erzeugte mittlere Belichtungsintensität nach Maßgabe des Tastverhältnisses der Pulsweitenmodulation eingestellt werden.

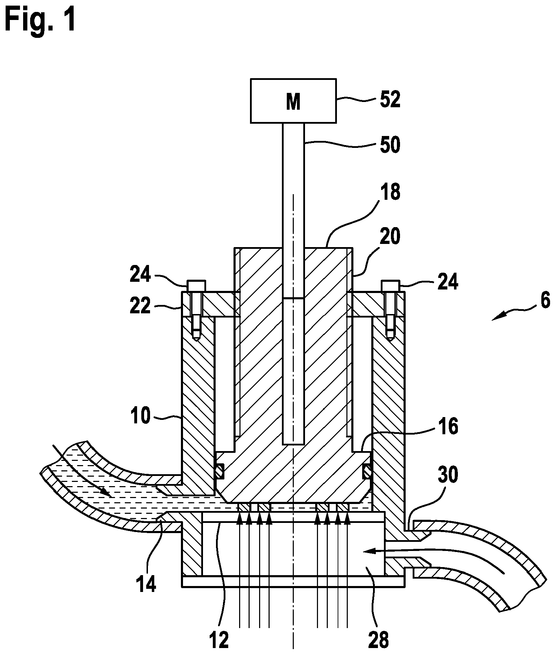

Der mittlere Abschnitt 6 umfasst den eigentlichen Bauraum, in dem der Formkörper aufgebaut wird. Die Gestaltung der Vorrichtung im Inneren des mittleren Abschnitts 6 wird weiter unten mit Bezug auf die Fig. 1 bis 5 näher beschrieben.

Im oberen Abschnitt 8 ist unter anderem ein Antriebsmotor untergebracht, der einen im mittleren Abschnitt 6 verschiebbaren Kolben antreibt, wie weiter unten genauer beschrieben wird.

Der Aufbau der Vorrichtungskomponenten im mittleren Abschnitt 6 wird nun mit Bezug auf Fig. 1 näher erläutert. Der mittlere Abschnitt 6 umfasst einen Zylinder 10. Eine untere Endfläche des Zylinders 10 ist durch eine transparente Basisscheibe 12 geschlossen. Oberhalb der Basisscheibe 12 mündet in axialer Richtung daran angrenzend eine Zuleitung 14 in das Innere des Zylinders 10.

Im Inneren des Zylinders 10 ist ein Kolben 16 gleitfähig geführt, der einen Kolbenstange 18 aufweist. Die Kolbenstange 18 ist über einen großen Teil ihrer Längserstreckung mit einem Außengewinde 20 versehen, das in ein Innengewinde geschraubt ist, das an der Innenwand einer zentralen Öffnung eines den Zylinder 10 gegenüber der Basisschreibe 12 verschließenden Deckels 22 vorhanden ist. Der Deckel 22 ist durch Schrauben 24 am Zylinder 10 fixiert. Die Fixierung ist notwendig, damit bei Antrieb der Kolbenstange 20 zur Drehung um ihre Längsachse das Innengewinde des Deckels 22 ortsfest bleibt und so die Drehbewegung der Kolbenstange 18 in eine definierte Translationsbewegung der Kolbenstange 18 und damit des Kolbens 16 umgesetzt wird. Andererseits sollte die Fixierung des Deckels 22 am Zylinder 10 lösbar sein, wie in diesem Fall durch Lösen der Schrauben 24, damit nach Abschluss des Bauvorgangs die Fixierung gelöst und danach Kolben und Kolbenstange mit darauf sitzendem Deckel 22 aus dem Zylinder herausgezogen werden können, um den Formkörper, der an der Stirnseite des Kolbens 16 hängt, zu entnehmen.

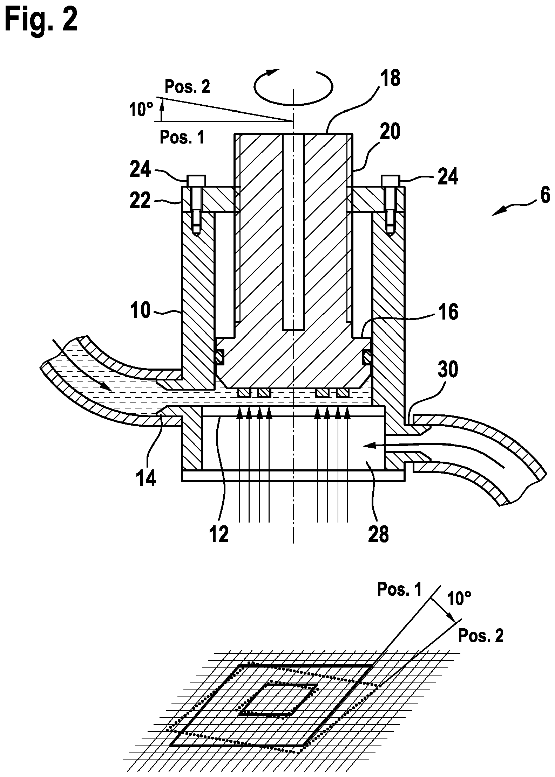

Ein schematisch dargestellter Antriebsmotor 52 wirkt auf die Kolbenstange 18 ein, um diese in vorgegebenen Drehschritten um ihre Längsachse zu drehen, was durch die Gewindeführung der Kolbenstange 18 in dem Deckel 22 eine axiale Bewegung des Kolbens 16 bewirkt. Genauer gesagt treibt der Antriebsmotor 52 einen Antriebsstift 50 zur Drehung an, der in einer auf der Längsachse der Kolbenstange 18 zentrierten Ausnehmung aufgenommen ist. Der Antriebsstift 50 und die Ausnehmung in der Kolbenstange 18 haben eine komplementäre, nicht drehsymmetrische Querschnittsform, so dass ein in Drehrichtung der Kolbenstange 18 um ihre Längsachse formschlüssiger Eingriff zwischen Antriebsstift 50 und Kolbenstange 18 bewirkt wird. Die Ausnehmung und der Antriebsstift können z.B. eine sechseckige oder anderweitig polygonale Querschnittsform haben, die einen formschlüssigen Eingriff in Drehrichtung bewirken, während der Antriebsstift 50 in Richtung der Längsachse der Kolbenstange gleitfähig darin beweglich ist, so dass bei Drehung der Kolbenstange 18 durch den Antriebsmotor 52 und die dadurch bewirkt translatorische Bewegung von Kolben 16 samt Kolbenstange 18 weg von der Basisscheibe 12 der Antriebsstift 50 relativ zur Kolbenstange bewegt wird und tiefer in die Ausnehmung hinein bewegt wird. Zur Vereinfachung der Darstellungen sind der Antriebsmotor 52 und der Antriebsstift 50 in den folgenden Figuren 2 bis 5 fortgelassen.

Fig. 1 zeigt einen Zustand in einer frühen Phase des Bauvorgangs für einen Formkörper. Zu Beginn des Bauvorgangs befindet sich die der Basisscheibe 12 zugewandt Stirnfläche des Kolbens 16 in Anlage an der zugewandten Oberfläche der Basisscheibe 12. Zur Bildung einer ersten Schicht von photopolymerisierbarem Material wird der Kolben 16 durch den Antriebsmotor um einen von einer Steuereinheit vorgegebenen Drehschritt um seine Längsachse gedreht, wobei der Drehwinkel des Drehschrittes so vorgegeben ist, dass die Drehung um den Drehwinkel eine axiale Verschiebung des Kolbens 16 von der Basisscheibe 12 weg bewirkt, so dass die Stirnseite des Kolbens 16 von der zugewandten Oberfläche der Basisscheibe 12 um die gewünschte vorgegebene Schichtdicke entfernt ist. Gleichzeitig mit der Bewegung des Kolbens 16 weg von der Basisscheibe 12 wird Baumaterial durch die Zuleitung 14 nachgefördert, so dass das durch die Bewegung des Kolbens 16 weg von der Basisscheibe 12 entstehende zusätzliche Volumen zwischen der Stirnfläche des Kolbens 16 und der zugewandten Oberfläche der Basisscheibe 12 durch Baumaterial gefüllt wird. Nachdem auf diese Weise eine Schicht mit der gewünschten Schichtdicke zwischen der Stirnfläche des Kolbens 16 und der zugewandten Oberfläche der Basisscheibe 12 gebildet ist, folgt nun die Belichtung von Schichtgebieten innerhalb einer für diese Schicht vorgegebenen Kontur, um diese Schichtgebiete durch Belichtung zum Aushärten zu bringen. Die in Fig. 1 dargestellte Belichtung der ersten Schicht dient dazu, um z.B. stiftförmige Stützstrukturen auszuhärten, die den aufzubauenden Formkörper mit der Stirnfläche des Kolbens 16, welche die Funktion der Bauplattform hat, verbinden.

Nach der Belichtung der ersten Schicht wird zur Bildung einer weiteren Schicht von Baumaterial der Kolben 16 um eine weitere Schichtdicke von der zugewandten Oberfläche der Basisscheibe 12 weg bewegt und gleichzeitig Baumaterial durch die Zuleitung 14 nachgeführt. Das Ergebnis dieses Vorgangs ist in Fig. 2 gezeigt. Die Bewegung des Kolbens 16 wird durch Drehung der Kolbenstange 18 um ihre Längsachse in einem Drehschritt um einen Drehwinkel von 10° bewirkt. Der Drehwinkel ist vorab so bestimmt, dass sich bei diesem Drehwinkel bei der gegebenen Gewindesteigung der Gewindeverbindung der Kolbenstange 18 in dem Innengewinde des Deckels 22 die axiale Verschiebung der Stirnfläche des Kolbens 16 weg von der Basisscheibe um die gewünschte Schichtdicke ergibt. Der bei der Bewegung des Kolbens 16 weg von der zugewandten Oberfläche der Basisscheibe 12 dazwischen entstehende Volumenraum wird durch die Nachführung von Baumaterial durch die Zuleitung 14 aufgefüllt. Danach erfolgt der Belichtungsschritt für die zweite Schicht. Hierbei wird berücksichtigt, dass die ausgehärteten belichteten Schichtgebiete der ersten Schicht sich durch die Drehung des Kolbens 16 um den Drehwinkel von 10° gedreht haben, so dass entsprechend die Belichtungsgebiete der zweiten jetzt zu belichtenden Schichtgebiete entsprechend um 10° gedreht werden müssen, damit sie relativ zu den ausgehärteten Schichtgebieten der ersten Schicht die richtige Positionierung haben. Diese relative Drehung ist im unteren Teil von Fig. 2 illustriert, worin gezeigt ist, wie ein Schichtgebiet (Quadrat mit offenem Innenquadrat), das beispielhaft als erstes ausgehärtetes Schichtgebiet mit durchgezogenen Linien dargestellt ist, nach der Drehung des Kolbens 16 um den vorgegebenen Drehwinkel von 10° relativ zu dem Koordinatensystem der Belichtungseinheit gedreht liegt, wie mit den gepunkteten Linien gezeigt ist. Die die Belichtungseinheit ansteuerende Steuereinheit muss diese relative Drehung berücksichtigen, damit die nächste auszuhärtende Schicht dann in Schichtgebieten ausgehärtet wird, die in ihrer Drehstellung relativ zu der vorhergehenden ausgehärteten Schicht richtig positioniert sind. Dies kann durch eine die Drehung um den vorgegebenen Drehschritt ausführende Rechenoperation erfolgen, die die nächsten auszuhärtenden Schichtgebiete um den Drehschritt dreht und so dem vorhergehend ausgehärten Schichtgebiet nachführt. Dabei bleibt die Belichtungseinheit in ihrer Position und Orientierung unverändert und nur die Kontur des entsprechenden Schichtgebiets wird gedreht.

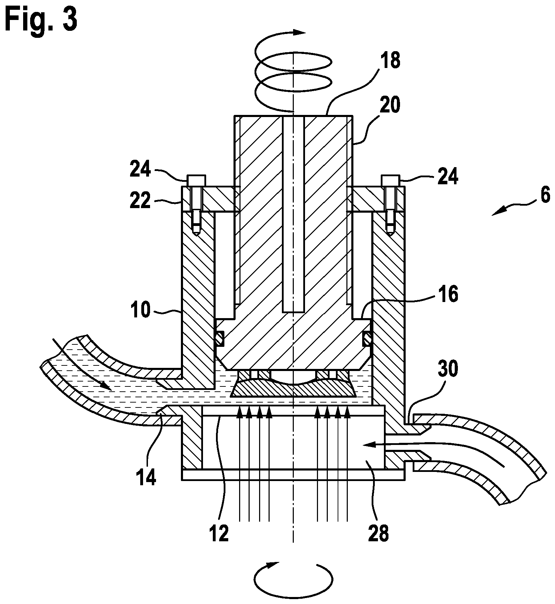

Fig. 3 zeigt die Vorrichtung in einer mittleren Phase des Bauvorgangs, in der bereits mehrere Schichten sukzessive gebildet und in Belichtungsgebieten mit jeweils vorgegebener Kontur ausgehärtet worden sind, so dass bereits ein Teil des Formkörpers aufgebaut ist. Der Kolben hat sich bis zu diesem Schritt bereits mehrfach um jeweils eine Schichtdicke von der zugewandten Oberfläche der Basisscheibe 12 weg bewegt. Zuletzt hat der Kolben 16 eine weitere Drehung um 10° ausgeführt, um sich dadurch um eine weitere Schichtdicke von der zugewandten Oberfläche der Basisscheibe 12 weg zu bewegen, wobei gleichzeitig mit dieser Bewegung Baumaterial durch die Zuleitung 14 nachgeführt worden ist, um das durch die Bewegung des Kolbens entstehende zusätzliche Volumen im Bauraum gefüllt zu halten.

Der unten in Fig. 3 gezeigte gekrümmte Pfeil soll andeuten, dass bei der Ansteuerung der Belichtungseinheit der jeweils gegenüber der ersten Belichtung erfolgte kumulierte Drehwinkel berücksichtigt wird, damit die jeweils aktuell zu belichtende Schicht mit ihren Belichtungsgebieten in der richtigen Drehstellung zu den vorhergehenden Belichtungsgebieten steht. Anders ausgedrückt muss das Koordinatensystem, in dem die Form- oder Konturdaten der für die jeweilige Schicht auszuhärtenden Schichtgebiete definiert sind, gemäß der kumulierten Drehung des Kolbens mitgedreht werden, so dass ein entsprechend gedrehtes Bild des Belichtungsgebiets oberhalb der Basisscheibe 12 belichtet wird.

An Fig. 3 ist auch zu erkennen, dass der von der Basisscheibe 12, dem Zylinder 10 und dem Kolben 16 umschlossene Bauraum sukzessive, Schichtdicke um Schichtdicke mit dem im Aufbau befindlichen Formkörper mitwächst.

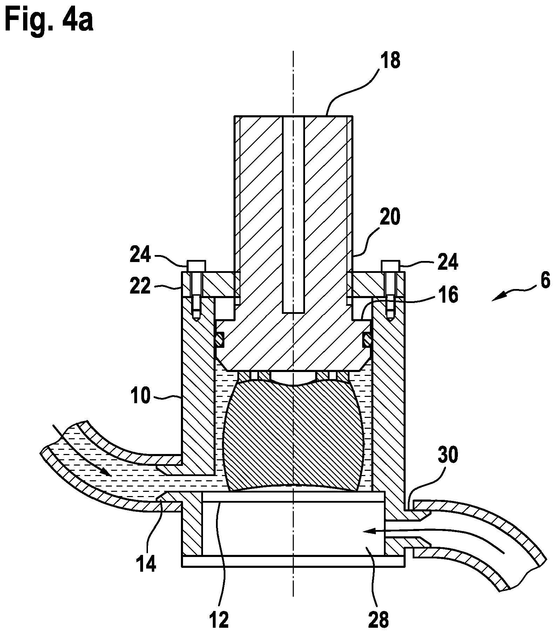

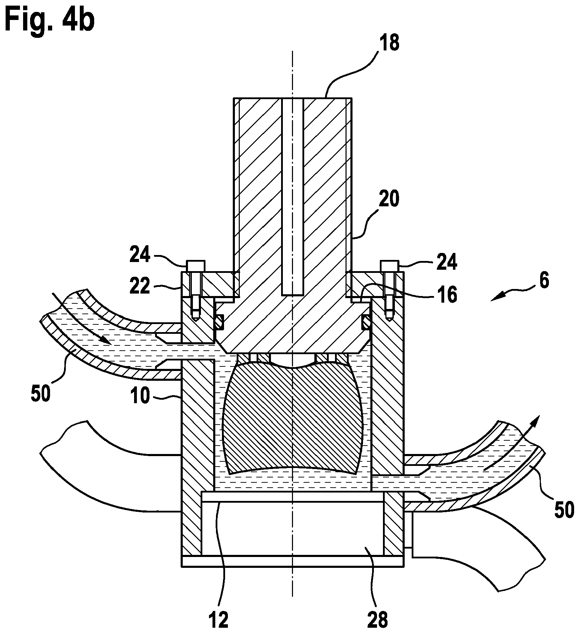

Fig. 4a zeigt den Bauvorgang im Endstadium, wenn die letzte Schicht des nunmehr aufgebauten Formkörpers, in diesem Fall ein Kunstzahn, belichtet worden ist. Nach Abschluss der letzten Belichtung kann das überschüssige, nicht-polymerisierte Baumaterial aus dem Zylinder entfernt werden, indem durch einen nicht gezeigten Anschluss Druckluft ins Innere des Zylinders geleitet und dadurch noch verbliebenes nicht-polymerisiertes Baumaterial durch die Zuleitung aus dem Inneren des Zylinders wieder zurück in die dazugehörige Materialkartusche gedrückt wird. Anschließend kann durch Einleiten von Reinigungsflüssigkeit in das Innere des Zylinders an dem aufgebauten Formkörper noch anhaftendes Restmonomer entfernt werden, was in Fig. 4b gezeigt ist, die einen Querschnitt in einer gegenüber Fig. 4a um die Zylinderachse gedrehten Ebene zeigt, in der eine Zuleitung 50 und eine Ableitung 52 für Reinigungsflüssigkeit im Schnitt zu sehen sind. In dieser Endphase ist der Kolben 16 im Zylinder soweit nach oben bewegt, dass er die Zuleitungsöffnung für die Reinigungsflüssigkeit passiert hat, so dass Zuleitungsöffnung der Zuleitung 50 zum Zylinderinneren geöffnet ist. Nach dem Reinigungsvorgang kann der Formkörper nach Öffnen des Deckels 22 an dem Kolben 16 hängend aus dem Zylinder 10 entnommen werden kann. Wenn das Baumaterial wie im vorliegenden Fall für den Aufbau einer Dentalrestauration ein mit Keramikpartikeln gefüllter Schlicker ist, wird der entnommene Formkörper dann weiteren Verarbeitungsschritten mit Wärmebehandlung unterzogen, nämlich dem Entbindern und dem anschließenden Sintern zur weiteren Verdichtung des keramischen Formkörpers.

In den Fig. 1 bis 4b ist die Zuleitung 14 mit einem angesetzten Schlauch verbunden dargestellt, aber der Behälter und die Fördereinrichtung zum Fördern von Baumaterial in die Zuleitung 14 zur Vereinfachung der Darstellung fortgelassen.

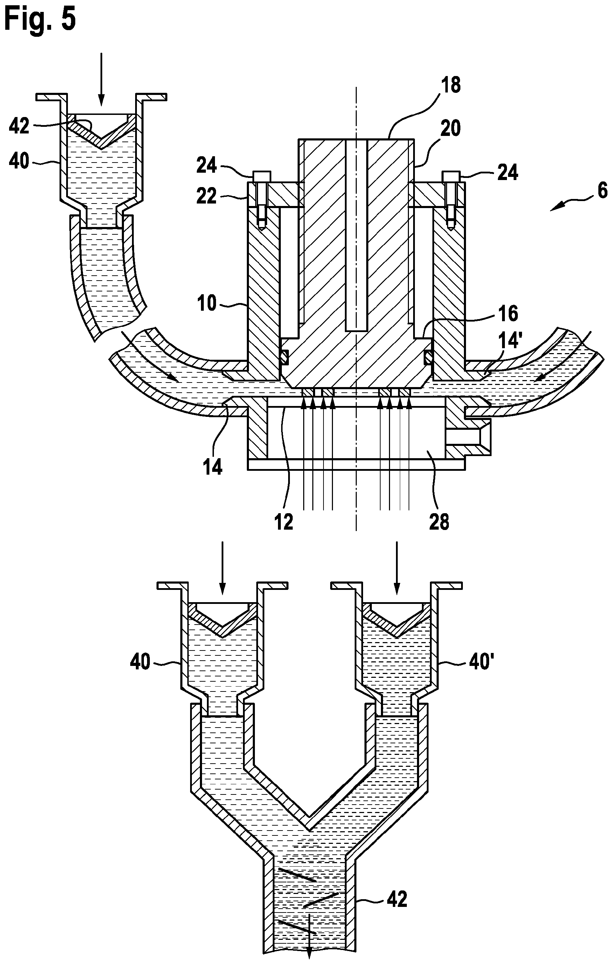

In Fig. 5 ist ein Behälter 40 gezeigt, in dem ein Vorrat von Baumaterial aufgenommen ist. In diesem Beispiel ist der Behälter 40 als Kartusche ausgebildet, in der ein Kartuschenkolben oder -stopfen 42 angeordnet ist. Auf den Kartuschenkolben 42 wirkt ein steuerbarer Antrieb ein, um den Kartuschenkolben 42 kontrolliert ins Innere der Kartusche zu schieben, um so Baumaterial aus der Kartusche in den angeschlossenen Schlauch und letztlich in die Zuleitung 12 ins Innere des Zylinders 10 zu fördern. Der steuerbare Antrieb, der auf den Kartuschenkolben 42 einwirkt, kann beispielsweise ein Stellmotor sein, der zum Beispiel über eine verschiebbare Zahnstange auf den Kartuschenkolben 42 einwirkt. Alternative kann hydraulisch oder pneumatisch Druck auf den Kartuschenkolben 42 ausgeübt werden, um diesen ins Innere der Kartusche zu drücken und entsprechend Baumaterial zu fördern.

In Fig. 5 ist im Vergleich zu der Ausführungsform nach Fig. 1 bis 4b eine Erweiterung für alternative Ausführungsformen des Verfahrens dargestellt, nämlich eine zweite Zuleitung 14' an der eine weitere Kartusche angeschlossen werden kann, um selektiv aus einer der beiden Kartuschen oder aus beiden gleichzeitig Baumaterial nachzuführen, wobei in unterschiedlichen Kartuschen unterschiedliche Baumaterialzusammensetzungen bereitgehalten werden können. Dadurch können in jeder neu zu bildenden Schicht verschiedene Baumaterialzusammensetzungen nachgeführt werden, und kann so der Materialverlauf über den aufgebauten Formkörper variiert werden. Alternativ zur Zufuhr von unterschiedlichen Baumaterialzusammensetzungen in das Innere des Zylinders über verschiedene Zuleitungen 14, 14' können auch mehrere Behälter 40, 40' an eine gemeinsame Sammelleitung angeschlossen sein, die dann zu einer Zuleitung 14 führt. Am Eingang dieser Sammelleitung können Mischelemente angeordnet sein, die für eine gute Vermischung der aus den unterschiedlichen Kartuschen zugeführten Baumaterialzusammensetzungen sorgen sollen.

Ferner ist in den Fig. 1 bis 5 eine Kammer 28 dargestellt, die unter der Basisscheibe 12 liegt. Ein Stutzen 30 erlaubt den Anschluss eines Schlauches zum Fördern von Material in die Kammer 28. Diese Ausgestaltung betrifft eine Basisscheibe 12, die inhibitorische Stoffe passieren lassen kann, die ein Anhaften von aushärtendem Baumaterial an der dem Inneren des Zylinders 10 zugewandten Oberfläche der Basisscheibe 12 verhindern oder minimieren. Die Basisscheibe 12 kann zum Beispiel aus einem nanoperösen Material gebildet sein. Inhibitorische Stoffe in Gasform können unter Druck durch den Stutzen 30 in die Kammer 28 gepumpt werden, so dass sie durch die nanoperöse Scheibe 12 hindurch gedrückt und an der dem Inneren des Zylinders 10 zugewandten Oberfläche der Basisscheibe 12 freigesetzt werden und dort Anhaften von Baumaterial verhindern. Dadurch kann nach Belichtung eines Belichtungsgebietes und Aushärten des Belichtungsgebietes der Kolben 16 ohne Anhaften der zuletzt ausgehärteten Schichtgebiete an der Basisscheibe 12 von dieser weg bewegt werden kann. Die Ablösung der zuletzt ausgehärteten Schichtgebiete von der Basisscheibe wird durch eine kombinierte Dreh- und Axialbewegung des Kolbens 16 wie im Zusammenhang mit der Ausführungsform nach den Fig. 1 - 5 beschrieben unterstützt, da dadurch auch eine Bewegungskomponente der Oberfläche des zuletzt ausgehärteten Schichtgebiets quer zur Oberfläche der Basisscheibe 12 vorhanden ist.

## Patentansprüche

1. Verfahren zum Aufbau eines Formkörpers durch stereolithographisches Aushärten von Baumaterial durch Photopolymerisation, bei dem
Baumaterial zwischen eine Bauplattform und eine transparente Basisscheibe (12) gefördert wird und durch die Basisscheibe hindurch ortsselektiv belichtet wird, um oberhalb der Basisscheibe (12) Baumaterial innerhalb einer vorgegebenen Kontur auszuhärten,
die Bauplattform relativ zur Basisscheibe (12) angehoben und Baumaterial nachgeführt wird,
die beiden Schritte fortgesetzt werden bis der Formkörper durch ortsselektiv ausgehärtetes Baumaterial aufgebaut ist,
wobei die Bauplattform an der Stirnseite eines in einem Zylinder (10) gleitfähig geführten Kolbens (16) liegt, wobei die der Stirnseite des Kolbens (16) zugewandte Endfläche des Zylinders durch die Basisscheibe (12) geschlossen ist, und weiteres Baumaterial nachgeführt wird, indem der Kolben (16) von der Basisscheibe (12) weg bewegt und gleichzeitig Baumaterial durch eine Zuleitung (14), die in das Innere des Zylinders mündet, gefördert wird, um das durch Bewegung des Kolbens (16) weg von der Basisscheibe (12) entstehende zusätzliche Volumen mit Baumaterial zu füllen,
**dadurch gekennzeichnet, dass** der Kolben (16) im Zylinder (10) bei der Bewegung weg von der Basisscheibe (12) gleichzeitig um eine mit der Längsachse des Zylinders (10) zusammenfallende Drehachse gedreht wird.

2. Verfahren nach Anspruch 1, bei dem der Formkörper schichtweise aufgebaut wird, indem
zu Beginn eine erste Schicht zwischen dem Kolben (16) und der Basisscheibe (12), die auf Abstand einer gewünschten Schichtdicke zueinander stehen, durch Auffüllen des Zwischenraums mit Baumaterial gebildet wird und die gebildete Schicht durch die Basisscheibe hindurch ortsselektiv belichtet wird, um ein Schichtgebiet mit für diese Schicht vorgegebener Kontur auszuhärten und an dem Kolben (16) zu fixieren,
der Kolben (16) um eine Schichtdicke von der Basisscheibe (12) weg bewegt und eine weitere Schicht Baumaterial zwischen der zuletzt ausgehärteten Schicht und der Basisscheibe (12) durch Nachführen von Baumaterial gebildet wird,
die weitere Schicht durch die Basisscheibe (12) hindurch ortsselektiv belichtet wird, um ein Schichtgebiet mit für die jeweilige Schicht vorgegebener Kontur auszuhärten, und
die beiden zuletzt genannten Schritte so oft wiederholt werden bis der Formkörper durch die übereinander ausgehärteten Schichtgebiete aufgebaut ist,
wobei eine weitere Schicht Baumaterial gebildet wird, indem der Kolben (16) um eine der gewünschten Schichtdicke entsprechende Distanz von der Basisscheibe weg bewegt und gleichzeitig Baumaterial durch die Zuleitung (17) gefördert wird, um das durch die Bewegung des Kolbens weg von der Basisscheibe zusätzliche Volumen mit Baumaterial zu füllen.

3. Verfahren nach Anspruch 1 oder 2, **dadurch gekennzeichnet, dass** die Drehung des Kolbens (16) durch einen Antriebsmotor (52) bewirkt wird und dass die Bewegung des Kolbens weg von der Basisscheibe (12) und die Drehung des Kolbens (16) durch eine Getriebeverbindung miteinander gekoppelt sind.

4. Verfahren nach einem der vorhergehenden Ansprüche, **dadurch gekennzeichnet, dass** Baumaterial in einer mit der Zuleitung (14, 14') des Zylinders (10) verbundenen Kartusche (40, 40') bereitgehalten wird und dass Baumaterial durch die Zuleitung in den Zylinder gefördert wird, indem ein kontrolliert angetriebener Kartuschenkolben (42) Druck auf das Baumaterial ausübt und aus der Kartusche in den Zylinder (10) presst.

5. Verfahren nach Anspruch 4, **dadurch gekennzeichnet, dass** mehrere durch eine Zuleitung (14, 14') mit dem Zylinder (10) verbundene Kartuschen (40, 40') vorhanden sind, die mit jeweils unterschiedlichen Baumaterialien gefüllt sind und aus denen unter Steuerung der Steuereinheit selektiv eine oder mehrere von den Baumaterialien in den Zylinder (10) gefördert werden.

6. Verfahren nach einem der vorhergehenden Ansprüche, **dadurch gekennzeichnet, dass** nach Abschluss des Aufbaus des Formkörpers überschüssiges nicht-polymerisiertes Baumaterial mittels Druckluft aus dem im Zylinderinneren durch den Kolben abgeschlossenen Bauraum herausgepresst wird.

7. Verfahren nach Anspruch 6, **dadurch gekennzeichnet, dass** nach Entfernen des überschüssigen Baumaterials Reinigungsflüssigkeit in und/oder durch den Zylinder (10) geleitet wird, um den Formkörper von anhaftenden Baumaterialresten zu befreien.

8. Vorrichtung zur Durchführung eines Verfahrens nach einem der vorhergehenden Ansprüche, wobei die Vorrichtung aufweist
einen Zylinder (10), dessen eine Grundseite durch eine wenigstens in einem zentralen Gebiet transparente Basisscheibe (12) geschlossen ist und in dem ein Kolben (16) in Längsrichtung des Zylinders (10) durch einen Antriebsmotor (52) verfahrbar geführt ist, so dass durch den Zylinder (10), den Kolben (16) und die Basisscheibe (12) ein umschlossener Bauraum mit variablem Volumen im Inneren des Zylinders (10) definiert ist,
einen Behälter (40) mit Baumaterial, der über ein Zuleitung (14), die ins Innere des Zylinders mündet, und eine Fördereinrichtung zum Fördern von Baumaterial aus dem Behälter (40) durch die Zuleitung (14) ins Innere des Zylinders (10),
eine Belichtungseinheit, die zur ortselektive Belichtung durch die Basisscheibe (12) hindurch ausgestaltet ist, und
eine Steuereinheit, die dazu eingerichtet ist, den Antriebsmotor (52) des Kolbens und die Fördereinrichtung zu steuern, um den durch Bewegung des Kolbens weg von der Basisscheibe entstehenden zusätzlichen Raum mit Baumaterial zu füllen, und dazu eingerichtet ist, die Belichtungseinheit zur ortselektiven Belichtung anzusteuern, um nachgeführtes Baumaterial oberhalb der Basisscheibe (12) innerhalb einer von der Steuereinheit vorgegebenen Kontur auszuhärten,
**dadurch gekennzeichnet, dass** der Kolben auf der von der Basisscheibe (12) abgewandten Seite mit einer Kolbenstange (18) mit einem Außengewinde (20) versehen ist, das in ein Innengewinde in einer relativ zu dem Zylinder fixierten Komponente (22) eingreift, dass die Kolbenstange eine zentrale, nicht drehsymmetrische Ausnehmung hat, in die ein im Querschnitt komplementär geformter Antriebsstift (50) gleitfähig eingeführt ist, und dass der Antriebsstift (50) durch den Antriebsmotor (52) zur Drehung um seine Längsachse antreibbar ist, wodurch die Kolbenstange (18) und der Kolben (16) mitgedreht werden, wodurch das Außengewinde der Kolbenstange (18) in dem Innengewinde der fixierten Komponente (22) gedreht wird, um so den Kolben (16) relativ zu der Basisscheibe (12) zu bewegen, wobei der Antriebsstift (50) in der Ausnehmung der Kolbenstange verschoben wird.

9. Vorrichtung nach Anspruch 8, **dadurch gekennzeichnet, dass** der Behälter (40) als Kartusche und die Fördereinrichtung als angetrieben vorschiebbarer Kartuschenkolben (42) ausgebildet sind, der bei durch die Steuereinheit gesteuertem Vorschub Baumaterial aus der Kartusche durch die Zuleitung (14) in den Zylinder (10) drückt.

10. Vorrichtung nach einem der Ansprüche 8 bis 9, **dadurch gekennzeichnet, dass** an der Zuleitung (14) ein Ventil vorhanden ist, das dazu ausgestaltet ist, die Zuleitung unter Steuerung der Steuereinheit offen zu halten oder zu sperren.

11. Vorrichtung nach Anspruch 9 oder Ansprüchen 9 und 10, **dadurch gekennzeichnet, dass** das eine Mehrzahl von um den Umfang des Zylinders herum verteilt angeordneten, an die Basisscheibe angrenzenden Zuleitungen (14, 14') vorhanden sind.

12. Vorrichtung nach einem der Ansprüche 8 bis 11, **dadurch gekennzeichnet, dass** die Basisscheibe (12) so ausgebildet ist, dass die dem Inneren des Zylinders (10) zugewandten Seite inhibitorisch wirkende Stoffe abgibt, die ein Anhaften der ausgehärteten Schicht an der dem Inneren des Zylinders zugewandten Oberfläche der Basisscheibe (12) minimieren.

13. Vorrichtung nach Anspruch 12, **dadurch gekennzeichnet, dass** die Basisscheibe (12) aus einem nanoporösen Material besteht, in dem inhibitorische Stoffe gespeichert sind und aus dem diese abgegeben werden und/oder durch das inhibitorische Stoffe diffundieren und die Basisscheibe (12) passieren können.

14. Vorrichtung nach Anspruch 13, **dadurch gekennzeichnet, dass** auf der dem Inneren des Zylinders abgewandten Seite der Basisscheibe (12) eine Kammer (28) so ausgebildet ist, die durch eine Zuleitung (30) mit einem transparenten inhibitorischen Stoff befüllbar ist.

15. Vorrichtung nach einem der Ansprüche 8 bis 13, **dadurch gekennzeichnet, dass** die dem Inneren des Zylinders zugewandte Oberfläche der Basisscheibe mit einer superamphiphoben Schicht beschichtet ist, die Anhaften der ausgehärteten Schicht an der Bassscheibe weiter minimiert.

## Claims

1. Method for building a shaped body by stereolithographic solidification of building material by photopolymerization, in which method
building material is conveyed between a building platform and a transparent bottom plate (12) and is exposed in a spatially selective manner through the bottom plate in order to solidify building material above the bottom plate (12) within a predetermined contour,
the building platform is lifted relative to the bottom plate (12), and building material is replenished; and
these two steps are continued until the shaped body is built by spatially selectively solidified building material;
wherein the building platform is located on a front face of a piston (16) which is slidably guided in a cylinder (10), wherein the end face of the cylinder facing the piston is closed by the bottom plate (12), and that further building material is replenished by moving the piston (60) away from the bottom plate (12) and simultaneously conveying building material through a supply line (14) which leads to the interior of the cylinder in order to fill the additional volume being created by the movement of the piston (16) away from the bottom plate (12) with building material;
**characterized in that** the piston is, when it is moved in the cylinder away from the bottom plate, simultaneously rotated about a rotational axis coinciding with the longitudinal axis of the cylinder (10).

2. Method according to claim 1, in which method the shaped body is built layer-wise
by forming a first layer of building material at the beginning between the piston (16) and the bottom plate (12) which are set at a distance of a desired layer thickness by filling up the gap with building material, and by spatially selectively exposing the formed layer through the bottom plate in order to solidify a layer area with a contour as predetermined for this layer and to fix it to the piston (16);
by moving the piston (16) a layer thickness away from the bottom plate (12) and by forming a further layer building material between the last solidified layer and the bottom plate (12) by replenishing building material;
by spatially selectively exposing the further layer through the bottom plate (12) in order solidify a layer area with a contour predetermined for the respective layer; and
by repeating the two last mentioned steps as often as necessary until the shaped body is built by solidified layer areas on top of each other;
wherein a further layer of building material is formed by moving the piston (16) a distance corresponding to a desired layer thickness away from the base plate by simultaneously conveying building material through the supply line (17) in order to fill the additional volume created by the movement of the piston away from the bottom plate with building material.

3. Method according to claim 1 or 2, **characterized in that** the rotation of the piston (16) is effected by a drive motor (52), and that the movement of the piston away from the bottom plate (12) and the rotation of the piston (16) are coupled by a transmission connection.

4. Method according of one of the preceding claims, **characterized in that** the building material is held available in a cartridge (40, 40') connected to the supply line (14, 14') of the cylinder, and that building material is conveyed through the supply line by driving a cartridge piston (42) in a controlled manner to exert pressure on the building material and to press it out of the cartridge into the cylinder (10).

5. Method according to claim 4, **characterized in that** there are several cartridges (14, 14') which are connected via a supply line (40, 40') to the cylinder (10), which cartridges are filled with respectively different building materials and from which under the control of the control unit selectively one or more of the building materials are conveyed into the cylinder (10).

6. Method according to any of the preceding claims, **characterized in that** after building of the shaped body has been completed unused, unpolymerized building material is pressed by means of pressurized air out of the building space in the interior of the cylinder which is closed by the piston.

7. Method according to claim 6, **characterized in that** after removal of the unused building material cleaning liquid is directed into and/or through the cylinder (10) to remove building material residues adhering to the shaped body.

8. Device for carrying out a method according to any of the preceding claims, wherein the device comprises
a cylinder (10) wherein one of the end faces of the cylinder is closed by a bottom plate which is at least in a central area transparent, and wherein in the cylinder a piston (16) is guided to be displaceable by a drive motor in the longitudinal direction of the cylinder such that the cylinder (10), the piston (16) and the bottom plate (12) define a closed building space having a variable volume in the interior of the cylinder (10);
a container holding building material which is connected to a supply line which adjacent to the inner surface of the bottom plate opens into the interior of the cylinder (10), and a conveying device for conveying building material from the container (40) through the supply line (14) into the interior of the cylinder (10);
an exposure unit which is configured for spatially selectively exposure through the bottom plate; and
a control unit which is arranged to control a drive motor (52) of the piston and the conveying device so as to fill the additional space created by the movement of the piston away from the bottom plate with building material, and which is arranged to control the exposure unit for spatially selective exposure in order to solidify replenished building material above the bottom plate within a contour prescribe by the control unit;
**characterized in that** the piston is on the side facing away from the bottom plate (12) provided with a piston rod having an external thread (20) which engages an internal thread in a component (22) fixed relative to the cylinder, **in that** the piston rod has a central recess which is not rotationally symmetric, in which recess a complementary shaped drive pin (50) is slidable introduced, and that the drive pin (50) is drivable by the drive motor (52) to rotate about its longitudinal axis, whereby the piston rod (18) and the piston (16) are likewise rotated, whereby the external thread of the piston rod (18) is rotated in the internal thread of the fixed component (22) to move the piston (16) relative to the base plate (12), wherein the drive pin (50) is shifted in the recess of the piston rod.

9. Device according to claim 8, **characterized in that** the container (40) is formed as a cartridge and the conveying device is formed as a cartridge piston (42) which can be pushed forward by a drive, which cartridge piston when pushed forward under the control of the control unit presses building material out of the cartridge, through the supply line (14) into the cylinder (10).

10. Device according to any of the claims 8 to 9, **characterized in that** the supply line (14) is equipped with a valve which is configured to be controlled by the control unit to keep the supply line open or to block it.

11. Device according to claim 9 or claims 9 and 10, **characterized in that** there is a plurality of supply lines (14, 14') which are arranged circumferentially distributed around the cylinder and adjacent to the base plate.

12. Device according to any of the claims 8 to 11, **characterized in that** the base plate (12) is formed in such a manner that the surface of the base plate facing the interior of the cylinder (10) releases agents acting as inhibitors which minimize adhering of the solidified layer to the surface of the base plate (12) facing the interior of the cylinder.

13. Device according to claim 12, **characterized in that** the base plate (12) consists of a nanoporous material in which inhibitor agents are accumulated and from which these agents are released and/or through which inhibitor agents can defuse and pass the bottom plate (12).

14. Device according to claim 13, **characterized in that** on the side of the bottom plate (12) facing away from the interior of the cylinder a chamber (28) is formed which is fillable with a transparent inhibitor agent through a supply line (30).

15. Device according to any of the claims 8 to 13, **characterized in that** the surface of the bottom plate facing the interior of the cylinder is coated with a super amphiphobic layer which further minimizes adhering of the solidified layer to the bottom plate.

## Revendications

1. Procédé de fabrication d'un corps moulé par durcissement stéréolithographique de matériau de fabrication par photopolymérisation, dans lequel
le matériau de fabrication est acheminé entre une plate-forme de fabrication et une plaque de base (12) transparente et est exposé de manière localement sélective à de la lumière traversant la plaque de base afin de durcir du matériau de fabrication au-dessus de la plaque de base (12) à l'intérieur d'un contour prédéfini,
la plate-forme de fabrication est surélevée par rapport à la plaque de base (12) et du matériau de fabrication est rajouté,
les deux étapes se poursuivent jusqu'à ce que le corps moulé soit constitué d'un matériau de fabrication localement durci,
dans lequel la plate-forme de fabrication se trouve au niveau de la face terminale d'un piston (16) guidé de manière coulissante dans un cylindre (10), dans lequel la face terminale du cylindre tournée vers la face terminale du piston (16) est fermée grâce à la plaque de base (12), et du matériau de fabrication supplémentaire est rajouté en éloignant le piston (16) du disque de base (12) et en acheminant de manière simultanée du matériau de fabrication à travers une conduite d'alimentation (14) qui débouche à l'intérieur du cylindre, afin de remplir avec du matériau de fabrication le volume supplémentaire résultant de l'éloignement du piston (16) par rapport au disque de base (12),
**caractérisé en ce que**, lorsqu'il s'éloigne du disque de base (12), le piston (16) tourne dans le cylindre (10) de manière simultanée autour d'un axe de rotation coïncidant avec l'axe longitudinal du cylindre (10).

2. Procédé selon la revendication 1, dans lequel le corps moulé est fabriqué couches par couches
au début, une première couche est formée entre le piston (16) et le disque de base (12), qui se trouvent à une distance mutuelle correspondant à une épaisseur de couche souhaitée, en remplissant l'espace intermédiaire avec du matériau de fabrication, et la couche formée est exposée de manière localement sélective à de la lumière traversant la plaque de base afin de durcir une zone de couche avec un contour prédéfini pour ladite couche et la fixer au niveau du piston (16),
le piston (16) est éloigné du disque de base (12) à concurrence d'une épaisseur de couche et une autre couche de matériau de fabrication est formée entre la dernière couche durcie et le disque de base (12) grâce à un rajout de matériau de fabrication,
la couche supplémentaire est exposée de manière localement sélective à de la lumière traversant la plaque de base (12) afin de durcir une zone de couche avec un contour prédéfini pour la couche respective, et
les deux dernières étapes mentionnées sont répétées jusqu'à ce que le corps moulé soit constitué grâce aux zones de couche durcies superposées,
dans lequel une autre couche de matériau de fabrication est formée en éloignant le piston (16) par rapport au disque de base d'une distance correspondant à l'épaisseur de couche souhaitée et en acheminant de manière simultanée du matériau de fabrication à travers la conduite d'alimentation (17) afin de remplir avec du matériau de fabrication le volume supplémentaire résultant de l'éloignement du piston par rapport au disque de base.

3. Procédé selon la revendication 1 ou 2, **caractérisé en ce que** la rotation du piston (16) est provoquée par un moteur d'entraînement (52) et **en ce que** l'éloignement du piston par rapport au disque de base (12) et la rotation du piston (16) sont couplés grâce à une liaison par engrenage.

4. Procédé selon l'une quelconque des revendications précédentes, **caractérisé en ce que** du matériau de fabrication est maintenu prêt à l'emploi dans une cartouche (40, 40') reliée à la conduite d'alimentation (14, 14') du cylindre (10) et **en ce que** du matériau de fabrication est acheminé dans le cylindre en passant par la conduite d'alimentation, car un piston de cartouche (42) entraîné de manière commandée exerce une pression sur le matériau de fabrication et le presse hors de la cartouche jusque dans le cylindre (10).

5. Procédé selon la revendication 4, **caractérisé en ce qu'**il existe plusieurs cartouches (40, 40') reliées au cylindre (10) par une conduite d'alimentation (14, 14') et remplies de matériaux de fabrication respectivement différents et, parmi ceux-ci, un ou plusieurs des matériaux de fabrication est/sont acheminé(s) de manière sélective dans le cylindre (10) sous le contrôle de l'unité de commande.

6. Procédé selon l'une quelconque des revendications précédentes, **caractérisé en ce que**, une fois la fabrication du corps moulé achevée, l'excès de matériau de fabrication non polymérisé est expulsé, au moyen d'air comprimé, de l'espace de fabrication limité à l'intérieur du cylindre par le piston.

7. Procédé selon la revendication 6, **caractérisé en ce que**, après élimination de l'excès de matériau de fabrication, un fluide de nettoyage est introduit dans et/ou à travers le cylindre (10) afin de libérer le corps moulé des résidus de matériau de fabrication qui y adhèrent.

8. Dispositif permettant de mettre en œuvre un procédé selon l'une quelconque des revendications précédentes, dans lequel le dispositif présente
un cylindre (10) dont un côté de base est fermé par un disque de base (12) transparent dans au moins une zone centrale, et au sein duquel un piston (16) est guidé dans le sens longitudinal du cylindre (10) de manière à pouvoir être déplacé grâce à un moteur d'entraînement (52) de sorte qu'un espace de fabrication fermé avec un volume variable est défini à l'intérieur du cylindre (10) grâce au cylindre (10), au piston (16) et au disque de base (12),
un conteneur (40) avec du matériau de fabrication, présentant une conduite d'alimentation (14) qui débouche à l'intérieur du cylindre, et un dispositif d'acheminement permettant d'acheminer du matériau de fabrication depuis le conteneur (40) jusqu'à l'intérieur du cylindre (10) en passant par la conduite d'alimentation (14),
une unité d'exposition à la lumière qui est conçue pour une exposition localement sélective à de la lumière traversant la plaque de base (12), et
une unité de commande qui est configurée pour commander le moteur d'entraînement (52) du piston et le dispositif d'acheminement afin de remplir avec du matériau de fabrication l'espace supplémentaire résultant de l'éloignement du piston par rapport au disque de base, et qui est configurée pour commander l'unité d'exposition à la lumière permettant une exposition localement sélective à de la lumière afin de durcir du matériau de fabrication rajouté au-dessus du disque de base (12) à l'intérieur d'un contour prédéfini par l'unité de commande,
**caractérisé en ce que** le piston est muni, du côté se détournant du disque de base (12), d'une tige de piston (18) avec un filetage externe (20) qui vient en prise dans un filetage interne d'un composant (22) immobilisé par rapport au cylindre, **en ce que** la tige de piston présente un évidement central, ne présentant pas de symétrie de rotation, au sein duquel une tige d'entraînement (50) à section transversale formée de manière complémentaire est introduite de manière coulissante, et **en ce que** la tige d'entraînement (50) peut être entraînée en rotation autour de son axe longitudinal grâce au moteur d'entraînement (52), ce qui met la tige de piston (18) et le piston (16) en rotation, ce qui fait tourner le filetage externe de la tige de piston (18) dans le filetage interne du composant immobilisé (22) de manière à déplacer le piston (16) par rapport au disque de base (12), dans lequel la tige d'entraînement (50) est poussée dans l'évidement de la tige de piston.

9. Dispositif selon la revendication 8, **caractérisé en ce que** le récipient (40) est réalisé sous forme de cartouche et le dispositif d'acheminement est réalisé sous forme de piston de cartouche (42) pouvant être entrainé, qui pousse du matériau de fabrication hors de la cartouche jusque dans le cylindre (10) en passant par la conduite d'alimentation (14) lorsqu'une poussée est commandée par l'unité de commande.

10. Dispositif selon la revendication 8 ou 9, **caractérisé en ce qu'**il existe au niveau de la conduite d'alimentation (14) une vanne conçue pour maintenir ouverte ou bloquer la conduite d'alimentation sous le contrôle de l'unité de commande.

11. Dispositif selon la revendication 9 ou les revendications 9 et 10, **caractérisé en ce qu'**il existe une pluralité de conduites d'alimentation (14, 14') réparties sur la circonférence du cylindre et attenantes au disque de base.

12. Dispositif selon l'une quelconque des revendications 8 à 11, **caractérisé en ce que** la plaque de base (12) est réalisée de sorte que le côté tourné vers l'intérieur du cylindre (10) libère des substances inhibitrices qui minimisent l'adhérence de la couche durcie au niveau de la surface de la plaque de base (12) qui est tournée vers l'intérieur du cylindre.

13. Dispositif selon la revendication 12, **caractérisé en ce que** le disque de base (12) est constitué d'un matériau nanoporeux au sein duquel sont stockées des substances inhibitrices et à partir duquel elles sont libérées et/ou à travers lequel des substances inhibitrices peuvent diffuser et franchir le disque de base (12).

14. Dispositif selon la revendication 13, **caractérisé en ce que**, du côté du disque de base (12) se détournant de l'intérieur du cylindre, une chambre (28) est réalisée de manière à pouvoir être remplie d'une substance inhibitrice transparente grâce à une conduite d'alimentation (30).

15. Dispositif selon l'une quelconque des revendications 8 à 13, **caractérisé en ce que** la surface du disque de base qui est tournée vers l'intérieur du cylindre est revêtue d'une couche superamphiphobe qui minimise encore davantage l'adhérence de la couche durcie au niveau du disque de base.
